Europäisches Patentamt

European Patent Office

Office européen des brevets

(11) Veröffentlichungsnummer: **0 350 730 A2**

(12) **EUROPÄISCHE PATENTANMELDUNG**

(21) Anmeldenummer: **89111935.6**

(22) Anmeldetag: **30.06.89**

(51) Int. Cl.4: **C08G 63/52 , C09D 167/07**

(30) Priorität: **13.07.88 DE 3823702**

(43) Veröffentlichungstag der Anmeldung:
**17.01.90 Patentblatt 90/03**

(84) Benannte Vertragsstaaten:
**AT BE CH DE ES FR GB IT LI NL SE**

(71) Anmelder: **BAYER AG**

**D-5090 Leverkusen 1 Bayerwerk(DE)**

(72) Erfinder: **Meixner, Jürgen, Dr.**
**Josef-Brocker-Dyk 56**
**D-4150 Krefeld(DE)**
Erfinder: **Kremer, Wolfgang, Dipl.-Ing.**
**Lilienweg 6**
**D-4173 Kerken 2(DE)**
Erfinder: **Fischer, Wolfgang, Dr.**
**Eschendonk 6**
**D-4005 Meerbusch 3(DE)**

(54) **Verfahren zur Herstellung von Acryloylgruppen enthaltenden Polyestern und ihre Verwendung als Lackbindemittel.**

(57) Ein Verfahren zur Herstellung von Acryloylgruppen aufweisenden Polyestern durch Umsetzung von

A) 1,0 Mol Maleinsäureanhydrid mit

B) 0,4 bis 0,6 Mol einer Diolkomponente, bestehend aus mindestens einem zweiwertigen, gesättigten Alkohol mit 2 bis 6 Kohlenstoffatomen, und anschließende Umsetzung des so erhaltenen Zwischenprodukts mit

C) 0,9 bis 1,1 Mol einer Triolkomponente, bestehend aus mindestens einem Anlagerungsprodukt von 3 bis 6 Mol Ethylenoxid an 1 Mol eines dreiwertigen Alkohols des Molekulargewichtsbereichs 92 bis 134 und mit

D) 1,5 bis 1,95 Mol Acrylsäure, wobei die Komponente C) und D) als Gemisch zur Umsetzung gelangen, und die Verbindung der so erhaltenen Polyester als strahlenhärtbare Lackbindemittel.

EP 0 350 730 A2

## Verfahren zur Herstellung von Acryloylgruppen enthaltenden Polyestern und ihre Verwendung als Lackbindemittel

Die Erfindung betrifft ein Verfahren zur Herstellung von Acryloylgruppen enthaltenden Polyestern, die durch Strahlenhärtung in vernetzte Produkte überführt werden können, und ihre Verwendung als Lackbindemittel.

Es ist bekannt, daß mindestens zwei Acryloylgruppen tragende Polyester durch Strahlenhärtung (Elektronen- oder UV-Strahlenhärtung) vernetzt werden können. Solche Polyesteracrylate, die, wie beispielsweise in der DE-OS 2 261 612 oder DE-OS 2 838 691 beschrieben, als Umsetzungsprodukte von Acrylsäure mit Diolen, Polyolen und Dicarbonsäuren erhalten werden, weisen im allgemeinen eine hochviskose, teils harzartige Konsistenz auf. Um diese Massen in den verarbeitungsfähigen Zustand zu überführen, ist die Mitverwendung großer Mengen von Vinylmonomeren, sogenannter Reaktivverdünner, unerläßlich.

Die Verwendung von Reaktivverdünnern führt jedoch in den meisten Fällen dazu, daß in den applizierbaren Formulierungen das Bindemittel sehr stark verdünnt wird und somit die mittels der Polyesteracrylate bewirkten Lackeigenschaften durch die in den Film mit einpolymerisierten Reaktivverdünner nivelliert werden. Naturgemäß wird dieser Effekt besonders deutlich dann beobachtet, wenn das Bindemittel eine hochviskose Konsistenz aufweist. Ferner weisen viele Vinylmonomere einen intensiven Eigengeruch auf und sind hautreizend.

Dem Fachmann ist es geläufig, daß niederviskosere Polyesteracrylate erhalten werden, wenn niedermolekulare Polyester oder Polyether mit Acrylsäure verestert werden. Überzugsmassen auf Basis dieser Produkte härten unter Bestrahlung jedoch wesentlich langsamer und mit schlechteren Lackfilmeigenschaften (wie Härte, Kratzfestigkeit und Schleifbarkeit) aus, als die auf Basis der üblichen Polyesteracrylate.

Aufgabe der vorliegenden Erfindung war es deshalb, Polyesteracrylate bereitzustellen, die, da niedrigviskos, nur wenig Lösungsmittel zur Einstellung von Verarbeitungsviskosität benötigen und die dabei nach der Strahlenhärtung die gewohnt guten Eigenschaften der üblichen Polyesteracrylate aufweisen.

Überraschenderweise wurde nun gefunden, daß niedermolekulare Polyesteracrylate, die Reste von $\alpha,\beta$-ethylenisch ungesättigten Dicarbonsäuren, Diole, ethoxylierte Triole und Acrylsäure enthalten und die durch ein spezielles Verfahren hergestellt werden, die gestellten Anforderungen erfüllen. Trotz der niedrigen Viskosität der Harze ist eine Härtung unter UV-Bestrahlung in kurzer Zeit möglich. Dabei bilden sich kratz-, chemikalien- und wasserfeste Lackfilme mit guter Schleifbarkeit.

Gegenstand der Erfindung ist somit ein Verfahren zur Herstellung von Acryloylgruppen aufweisenden Polyestern einer Viskosität bei 23° C von 2.000 bis 12.000 mPa.s mit Säurezahlen von 0 bis 15 durch Umsetzung innerhalb des Temperaturbereiches von 75 bis 200° C von ungesättigten Dicarbonsäureanhydriden und ungesättigten Monocarbonsäuren mit zwei- und dreiwertigen Alkoholen, dadurch gekennzeichnet, daß man

A) 1,0 Mol Maleinsäureanhydrid mit

B) 0,4 bis 0,6 Mol einer Diolkomponente, bestehend aus mindestens einem zweiwertigen, gesättigten Alkohol mit 2 bis 6 Kohlenstoffatomen, gegebenenfalls in Anwesenheit eines wasserunlöslichen Lösungsmittels, innerhalb des Temperaturbereichs von 75 bis 200° C zu einem Ester- und Carboxylgruppen aufweisenden Zwischenprodukt umsetzt und dieses anschließend mit

C) 0,9 bis 1,1 Mol einer Triolkomponente, bestehend aus mindestens einem dreiwertigen, gesättigten, Ethergruppen aufweisenden Alkohol, der durch Anlagerung von 3 bis 6 Mol Ethylenoxid an 1 Mol eines dreiwertigen, gesättigten Alkohols des Molekulargewichtsbereichs 92 bis 134 erhalten worden ist, und mit

D) 1,5 bis 1,95 Mol Acrylsäure innerhalb des Temperaturbereichs von 75 bis 130° C umsetzt, wobei die Komponenten C) und D) als Gemisch zur Umsetzung gelangen.

Gegenstand der Erfindung ist auch die Verwendung der nach diesen Verfahren erhaltenen, ungesättigten Polyester als strahlenhärtbare Lackbindemittel.

Bei der Durchführung des erfindungsgemäßen Verfahrens werden vorzugsweise pro Mol Maleinsäureanhydrid A) 0,45 bis 0,55 Mol der Komponente B), 0,95 bis 1,05 Mol der Komponente C) und 1,6 bis 1,9 Mol der Komponente D) eingesetzt.

Bei der Komponente A) handelt es sich um Maleinsäureanhydrid.

Bei der Komponente B) handelt es sich um eine Diolkomponente, bestehend aus mindestens einem zweiwertigen, gesättigten Alkohol mit 2 bis 6 Kohlenstoffatomen. Typische Beispiele sind Ethylenglykol, Propandiol-1,2, Propandiol-1,3, Butandiol-1,2, Butandiol-1,3, Butandiol-1,4, Pentandiol-1,3, Hexandiol-1,6 und Diethylen glykol. Bevorzugt sind Ethylenglykol und Propandiol-1,2.

Bei der Komponente C) handelt es sich um eine Triolkomponente, bestehend aus mindestens einem dreiwertigen, gesättigten, Ethergruppen aufweisenden Alkohol, wie er durch Anlagerung von 3 bis 6 Mol

2

Ethylenoxid an einen gesättigten dreiwertigen Alkohol des Molekulargewichtsbereichs 92 bis 134 in an sich bekannter Weise erhalten werden kann. Vorzugsweise handelt es sich bei den Ethergruppen aufweisenden Triolen um die Ethoxylierungsprodukte von Glycerin, Trimethylolethan oder Trimethylolpropan, die unter Einhaltung eines Ethoxylierungsgrades von 3 bis 5 (Ethoxylierungsgrad = Anzahl der Mole Ethylenoxid, die an 1 Mol Triol im Durchschnitt angelagert werden) hergestellt worden sind. Besonders bevorzugt wird als Komponente C) das Anlagerungsprodukt von 3 bis 4 Mol Ethylenoxid an 1 Mol Trimethylolpropan ( = 1,1,1-Tris-(hydroxymethyl)-propan) verwendet.

Bei der Komponente D) handelt es sich um Acrylsäure.

Das erfindungsgemäße Verfahren besteht in einer Zweistufenreaktion, wobei in der ersten Stufe die Umsetzung der Komponenten A) und B) stattfindet und in der zweiten Stufe das so erhaltene Zwischenprodukt mit den Komponenten C) und D) zur Reaktion gebracht wird.

Die erste Stufe des erfindungsgemäßen Verfahrens kann entweder in Substanz, vorzugsweise unter Inertgasat mosphäre (z.B. Stickstoff) oder in Gegenwart eines wasserunlöslichen Lösungsmittels durchgeführt werden.

Im erstgenannten Fall wird die Umsetzung vorzugsweise innerhalb des Temperaturbereichs von 100 bis 200°C, insbesondere 150 bis 185°C, und im letztgenannten Fall vorzugsweise innerhalb des Temperaturbereichs von 75 bis 130°C, durchgeführt.

Bei dem auf diese Weise erhaltenen Zwischenprodukt handelt es sich, wie aus den Mengen der Ausgangskomponenten ersichtlich, um Ester- und Carboxylgruppen aufweisende Verbindungen.

Geeignete, gegebenenfalls bereits während der ersten Stufe des erfindungsgemäßen Verfahrens mitzuverwendende wasserunlösliche Lösungsmittel sind solche, wie sie in der zweiten Stufe zwecks azeotroper Entfernung des Kondensationswassers eingesetzt werden, d.h. diese, in der zweiten Stufe im allgemeinen eingesetzten, Lösungsmittel können bereits bei der Durchführung der ersten Stufe des erfindungsgemäßen Verfahrens zugegen sein.

Geeignete derartige wasserunlösliche Lösungsmittel sind beispielsweise Cyclohexan, Toluol und/oder Xylol, vorzugsweise Toluol.

Die zweite Stufe des erfindungsgemäßen Verfahrens besteht in einer Umsetzung der aus den Komponenten A) und B) gebildeten Zwischenstufe mit den Komponenten C) und D), wobei diese im Gemisch zur Umsetzung gebracht werden. Dies bedeutet entweder, daß die Komponenten C) und D) vor Erreichen der Reaktionstemperatur nacheinander oder als Gemisch dem Zwischenprodukt aus A) und B) zudosiert werden oder daß die Komponenten C) und D) als Mischung der bereits auf die Reaktionstemperatur vorerhitzten Zwischenstufe aus A) und B) zudosiert werden, wobei in allen Fällen ein wasserunlösliches Lösungsmittel der beispielhaft genannten Art zugegen sein kann.

Die zweite Stufe des erfindungsgemäßen Verfahrens wird im allgemeinen in Gegenwart von geeigneten Katalysatoren, die die Veresterung beschleunigen, insbesondere sauren Katalysatoren wie Schwefelsäure, p-Toluolsulfonsäure oder Naphthalinsulfonsäure durchgeführt, die im allgemeinen in Mengen von 0,1 bis 3 Gew.-%, bezogen auf das Gewicht der Komponenten A) bis D), zum Einsatz gelangen und gegebenenfalls bereits zu Beginn der Umsetzung den Ausgangskomponenten A) und/oder B) einverleibt werden können.

Um die erfindungsgemäßen Verfahrensprodukte vor unerwünschter, vorzeitiger Polymerisation zu bewahren, empfiehlt es sich, dem Reaktionsgemisch spätestens vor der Durchführung der zweiten Stufe des erfindungsgemäßen Verfahrens 0,01 bis 0,3 Gew.-%, bezogen auf das Gewicht der Komponenten A) bis D), an an sich bekannten Polymerisationsinhibitoren oder Antioxidantien hinzuzufügen. Geeignete derartige Zusatzmittel sind z.B. in "Methoden der organischen Chemie" (Houben-Weyl), 4. Auflage, Band XIV/1, S. 433ff, Georg Thieme Verlag, Stuttgart 1961, beschrieben.

Wie bereits oben angedeutet, wird vorzugsweise zumindest die zweite Stufe des erfindungsgemäßen Verfahrens in Gegenwart von wasserunlöslichen Lösungsmitteln der oben beispielhaft genannten Art, die eine Entfernung des Kondensationswassers unter azeotropen Bedingungen ermöglichen, durchgeführt.

Die Durchführung der zweiten Stufe des erfindungsgemäßen Verfahrens erfolgt vorzugsweise innerhalb des Temperaturbereichs von 75 bis 130°C, insbesondere 100 bis 130°C, unter Durchleiten von Luft, wobei die Reaktionsbedingungen vorzugsweise so lange aufrechterhalten werden, bis sich kein Kondensationswasser mehr bildet. Im Anschluß an die Umsetzung wird dann vorzugsweise das noch vorliegende Lösungsmittel destillativ entfernt.

Bei den erfindungsgemäßen Verfahrensprodukten handelt es sich um Acryloylgruppen aufweisende Polyester, die bei 23°C eine Viskosität von 2.000 bis 12.000, vorzugsweise 3.000 bis 11.000 mPa.s, aufweisen. Die Säurezahlen der Verfahrensprodukte liegen im allgemeinen bei 0 bis 15, vorzugsweise 2 bis 13 (mg KOH/g Substanz).

Bei der erfindungsgemäßen Verwendung der erfindungsgemäßen Verfahrensprodukte als Lackbindemittel können diese ohne Zusatz von copolymerisierbaren Monomeren (reaktive Verdünner) und ohne Zusatz

3

von Lösungsmitteln zur Anwendung gelangen, da es sich bei den erfindungsgemäßen Verfahrensprodukten um vergleichsweise niedrigviskose Substanzen handelt.

In den Fällen, in denen eine Abmischung mit copolymerisierbaren Monomeren gewünscht ist, ist dies selbstverständlich möglich. Zur Abmischung geeignete copolymerisierbare Monomere sind z.B. $C_1$-$C_4$-Alkylester der Acryl-oder Methacrylsäure und/oder Styrol, wobei diese Reaktivverdünner in Mengen von bis zu 70 Gew.-%, bezogen auf das Gesamtgewicht der erfindungsgemäßen Polyester und der Reaktivverdünner, zum Einsatz gelangen können.

Gewünschtenfalls ist es ebenfalls möglich, die erfindungsgemäßen Umsetzungsprodukte mit inerten Lösungsmitteln wie Butylacetat, Cyclohexan, Aceton und/oder Toluol abzumischen.

Die Zusätze können etwa 0 bis 70 Gew.-%, bezogen auf Mischung aus erfindungsgemäßen Reaktionsprodukten und zusätzlichen Lösungsmitteln, betragen.

Natürlich ist es auch möglich, Mischungen aus zusätzlichen Monomeren und Lösungsmitteln innerhalb der angegebenen Mengenverhältnisse einzusetzen.

Die unter erfindungsgemäßer Verwendung der erfindungsgemäßen Verfahrensprodukte hergestellten Lacke können die an sich bekannten Hilfs- und Zusatzmittel der Lacktechnologie wie z.B. Füllstoffe, Pigmente, Farbstoffe, Thixotropiermittel, Glättmittel, Mattierungsmittel oder Verlaufmittel in üblichen Mengen enthalten.

Die Lacke eignen sich hervorragend zur Verarbeitung auf den herkömmlichen mit Gießmaschinen ausgerüsteten Lackierstraßen. Weiter sind sie durch Walzen und Spritzen applizierbar. Bevorzugte Substrate sind Holz und holzähnliche Produkte, z.B. Furniere imitierende Folien oder Holzzementplatten.

Die Härtung erfolgt mit ionisierender, z.B. energiereicher Elektronenstrahlung bzw. in Gegenwart von Photoinitiatoren mit UV-Strahlung.

Als Photoinitiatoren, die den Lacken im Bedarfsfall spätestens vor ihrer Anwendung einverleibt werden, sind die für die Strahlenhärtung hinlänglich bekannten Verbindungen geeignet, wie beispielsweise Benzophenon sowie ganz allgemein aromatische Ketoverbindungen.

Bevorzugte Photoinitiatoren sind Benzoin und seine Derivate, wie beispielsweise in den DE-OS 1 769 168, 1 769 853, 1 769 854, 1 807 297, 1 807 301, 1 919 678 und der DE-AS 1 694 143 beschrieben, ferner Benzilketale wie z.B. Benzildimethylketale und Hydroxyalkylphenone wie z.B. 2-Hydroxy-2-methyl-1-phenyl-propan-1-on.

In den nachfolgenden Beispielen und Vergleichsbeispielen beziehen sich alle Prozentangaben auf das Gewicht.

Beispiele

In den nachstehend tabellarisch zusammengefaßten erfindungsgemäßen Herstellungsbeispielen werden jeweils zunächst in der ersten Stufe die Ausgangskomponenten A) und B) unter Stickstoff während 6 Stunden auf 150 bis 185° C in Abwesenheit von sonstigen Zusatzstoffen erhitzt.

Die Durchführung der zweiten Stufe des erfindungsgemäßen Verfahrens erfolgte jeweils in 70 %iger Lösung in Toluol in Gegenwart von 0,75 % p-Toluolsulfonsäure als Katalysator und von 0,1 % p-Methoxyphenol und 0,1 % Di-tert.-butylhydrochinon als Inhibitoren, stets bezogen auf die Summe der Komponenten A) bis D). Nach Zugabe der Komponenten C) und D) sowie Katalysatoren und Inhibitoren und Toluol wird das Gemisch unter Durchleiten von Luft weiter bei 110 bis 130° C so lange erhitzt, bis sich kein Wasser mehr abscheidet. Nach Abkühlen wird bei 50 bis 90° C das Lösungsmittel unter Vakuum abdestilliert.

Tabelle 1

| Ausgangsmaterialien (Mengenangaben in Mol) | | erfindungsgemäße Beispiele | | |
|---|---|---|---|---|
| | | 1 | 2 | 3 |
| A) | Maleinsäureanhydrid | 1,0 | 1,0 | 1,0 |
| B) | Ethylenglykol | 0,5 | | |
| | Propandiol-1,2 | | 0,5 | |
| | Diethylenglykol | | | 0,5 |
| C) | ethoxyliertes Trimethylolpropan (Ethoxylierungsgrad: 4) | 1,0 | 1,0 | 1,0 |
| D) | Acrylsäure | 1,8 | 1,8 | 1,8 |
| Eigenschaften des Polyesters | | | | |
| Säurezahl (mg KOH/g Substanz) | | | | |
| vor Abdestillieren des Toluols | | 15 | 13 | 8,5 |
| nach Abdestillieren des Toluols | | 12 | 11 | 8 |
| Viskosität | | | | |
| nach Abdestillieren des Toluols (mPa.s, 23°C) | | 4000 | 3300 | 3000 |

Zur Herstellung von UV-härtenden Lacken werden zu jeweils 100 g der erfindungsgemäßen Polyester der Beispiele 1 bis 3 jeweils 5 g Photoinitiator (2-Hydroxy-2-methyl-1-phenyl-propan-1-on) zugegeben. Die so erhaltenen Lacke werden auf eine furnierte Spanplatte mit einer Schichtdicke von 30 μm aufgetragen. Die Platte wird mit einer Geschwindigkeit von 20 m/min unter einem Hanoviastrahler (80 W/cm, 10 cm Abstand) durchbewegt. Es entstehen harte, kratz-, wasser- und chemikalienfeste Überzüge die sehr gut schleifbar sind.

Vergleichsbeispiel 1

Beispiel 1 wird exakt wiederholt mit der Änderung, daß anstelle einer zweistufigen, erfindungsgemäßen Fahrweise alle Komponenten A) bis D) zusammen in Toluol bei 110 bis 130°C erhitzt werden, bis sich kein Wasser mehr abscheidet. Der erhaltene Polyester hat folgende Kennzahlen:

| Säurezahl (mg KOH/g Substanz) | |
|---|---|
| vor Abdestillieren des Toluols: | 19 |
| nach Abdestillieren des Toluols: | 14 |
| Viskosität (mPa.s, 23°C): | 7000 |

Obwohl sich also schon bei einer Säurezahl von 19 kein Wasser mehr abschied, ist die Endviskosität des Produkts wesentlich höher als im erfindungsgemäßen Beispiel 1.

Vergleichsbeispiel 2

Beispiel 2 wird exakt wiederholt mit der Änderung, daß anstelle einer zweistufigen, erfindungsgemäßen Fahrweise alle Komponenten A) bis D) zusammen in Toluol bei 110 bis 130°C erhitzt werden, bis sich kein Wasser mehr abscheidet. Der erhaltene Polyester hat folgende Kennzahlen:

EP 0 350 730 A2

| Säurezahl (mg KOH/g Substanz) | |
|---|---|
| vor Abdestillieren des Toluols: | 22 |
| nach Abdestillieren des Toluols: | 15 |
| Viskosität (mPa.s, 23 °C): | 8600 |

Auch hier entsteht, wie im Vergleichsbeispiel 1, offensichtlich ein Produkt, das sich vom erfindungsgemäß hergestellten Produkt unterscheidet.

## Vergleichsbeispiel 3

Beispiel 1 wird exakt wiederholt mit der Änderung, daß anstelle eines Gemisches A) und B) das Gemisch A), B) und C) in einer ersten Stufe bis zu einer Säurezahl von ca. 5 (mg KOH/g Substanz) erhitzt wird. Bei der anschließenden azeotropen Umsetzung mit Acrylsäure in Toluol entsteht ein hochviskoses Produkt, das nicht mehr vom Lösungsmittel befreit werden kann.

## Vergleichsbeispiel 4

Beispiel 1 wird exakt wiederholt mit der Änderung, daß anstelle des Gemisches A) und B) das Gemisch A) und C) in einer ersten Stufe erhitzt wird. Bei der anschließenden azeotropen Umsetzung mit B) und Acrylsäure in Toluol entsteht ein hochviskoses Produkt, das vom Lösungsmittel nicht mehr befreit werden kann.

## Vergleichsbeispiel 5

Beispiel 1 wird exakt wiederholt mit der Änderung, daß nach dem Erhitzen des Gemisches A) und B) nicht mit dem Gemisch C) und D) weiterumgesetzt wird, sondern zuerst Komponente C) zugegeben und bis zu einer Säurezahl von ca. 5 (mg KOH/g Substanz) kondensiert wird und dann erst mit Acrylsäure unter azeotropen Bedingungen umgesetzt wird. Das dabei entstehende Produkt ist hochviskos und kann nicht mehr ohne weiteres vom Lösungsmittel befreit werden.

## Vergleichsbeispiel 6 - 10

Tabelle 2 zeigt Vergleichsprodukte, die jeweils statt eines erfindungsgemäßen Bausteins einen nicht erfindungsgemäßen Baustein enthalten oder aber eine mengenmäßige Zusammensetzung besitzen, die nicht erfindungsgemäß ist.

Das Herstellverfahren ist erfindungsgemäß. Die Polyester der Vergleichsbeispiele unterscheiden sich durch folgende Parameter von den erfindungsgemäßen Polyestern.

## Vergleichsbeispiel

6 Adipinsäure und Phthalsäureanhydrid anstelle von Maleinsäureanhydrid,
7 ca. dreifach propoxyliertes, anstelle ca. vierfach ethoxyliertem Trimethylolpropan,
8 Trimethylolpropan anstelle ethoxyliertem Trimethylolpropan,
9 und 10 nicht erfindungsgemäße Acrylsäuremengen,
11 nicht erfindungsgemäße Zusammensetzung.

6

Tabelle 1

| Ausgangsmaterialien (Mengenangaben in Mol) | | Vergleichsbeispiele | | | | | |
|---|---|---|---|---|---|---|---|
| | | 6 | 7 | 8 | 9 | 10 | 11 |
| A) | Maleinsäureanhydrid | | 1,0 | 1,0 | 1,0 | 1,0 | 1,0 |
| | Adipinsäure | 0,6 | | | | | |
| | Phthalsäureanhydrid | 0,4 | | | | | |
| B) | Ethylenglykol | | 0,5 | | | | 0,7 |
| | Propandiol-1,2 | 0,5 | | 0,5 | 0,5 | 0,5 | |
| C) | ethoxyliertes Trimethylolpropan (Ethoxylierungsgrad: 4) | 1,0 | | | 1,0 | 1,0 | 0,7 |
| | propoxyliertes Trimethylolpropan (Propoxylierungsgrad: 3) | | 1,0 | | | | |
| | Trimethylolpropan | | | 1,0 | | | |
| D) | Acrylsäure | 1,8 | 1,8 | 1,8 | 1,3 | 2,0 | 1,3 |
| Eigenschaften des Polyesters | | | | geliert | | trüb | |
| Säurezahl (mg KOH/g Substanz) | | | | | | | |
| vor Abdestillieren des Toluols | | 18 | 16 | | 10 | 18 | 16 |
| nach Abdestillieren des Toluols | | 10 | 12 | | 8 | 17 | 16 |
| Viskosität (mPa.s, 23°C) | | 4200 | 6900 | | 16000 | 4000 | 13000 |

Lacke aus den Polyestern der Vergleichsbeispiele 6 und 7 härten unter den obengenannten Bedingungen zu nur schlecht oder gar nicht schleifbaren Filmen aus.

Der Polyester des Vergleichsbeispiels 8 ist geliert, der des Vergleichsbeispiels 9 ist höherviskos als die erfindungsgemäßen Produkte. Der Polyester des Vergleichsbeispiels 10 ist trüb und besitzt eine hohe Säurezahl. Der Polyester des Vergleichsbeispiels 11 ist höherviskos, besitzt eine hohe Säurezahl und ein daraus gefertigter Lackfilm ist schlechter schleifbar als Lackfilme aus erfindungsgemäßen Polyestern.

## Ansprüche

1. Verfahren zur Herstellung von Acryloylgruppen aufweisenden Polyestern einer Viskosität bei 23°C von 2.000 bis 12.000 mPa.s mit Säurezahlen von 0 bis 15 durch Umsetzung innerhalb des Temperaturbereiches von 75 bis 200°C von ungesättigten Dicarbonsäureanhydriden und ungesättigten Monocarbonsäuren mit zwei- und dreiwertigen Alkoholen, dadurch gekennzeichnet, daß man
A) 1,0 Mol Maleinsäureanhydrid mit
B) 0,4 bis 0,6 Mol einer Diolkomponente, bestehend aus mindestens einem zweiwertigen, gesättigten Alkohol mit 2 bis 6 Kohlenstoffatomen,
gegebenenfalls in Anwesenheit eines wasserunlöslichen Lösungsmittels, innerhalb des Temperaturbereichs von 75 bis 200°C zu einem Ester- und Carboxylgruppen aufweisenden Zwischenprodukt umsetzt und dieses anschließend mit
C) 0,9 bis 1,1 Mol einer Triolkomponente, bestehend aus mindestens einem dreiwertigen, gesättigten, Ethergruppen aufweisenden Alkohol, der durch Anlagerung von 3 bis 6 Mol Ethylenoxid en 1 Mol eines dreiwertigen, gesättigten Alkohols des Molekulargewichtsbereichs 92 bis 134 erhalten worden ist, und mit
D) 1,5 bis 1,95 Mol Acrylsäure
innerhalb des Temperaturbereichs von 75 bis 130°C umsetzt, wobei die Komponenten C) und D) als Gemisch zur Umsetzung gelangen.
2. Verfahren gemäß Anspruch 1, dadurch gekennzeichnet, daß man 0,45 bis 0,55 Mol der Komponente B), 0,95 bis 1,05 Mol der Komponente C) und 1,6 bis 1,9 Mol der Komponente D) verwendet.
3. Verfahren gemäß Anspruch 1 und 2, dadurch gekennzeichnet, daß man die Umsetzung des

7

Zwischenproduktes aus den Komponenten A) und B) mit den Komponenten C) und D) in Gegenwart eines sauren Katalysators und in Gegenwart eines wasserunlöslichen Lösungsmittel unter azeotropen Bedingungen durchführt.

4. Verwendung der gemäß Anspruch 1 bis 3 erhaltenen Polyester als strahlenhärtbare Lackbindemittel.